# EUROPÄISCHE PATENTSCHRIFT

(11) **EP 2 661 951 B1**
(45) Veröffentlichungstag und Bekanntmachung des Hinweises auf die Patenterteilung: **11.04.2018**
(21) Anmeldenummer: 13155894.2
(22) Anmeldetag: 20.02.2013
(51) Int. Cl.: A01D 41/12

(54) **Mähdrescher**
Combine harvester
Moissonneuse-batteuse

(30) Priorität: 04.05.2012 DE 102012009041
(43) Veröffentlichungstag der Anmeldung: 13.11.2013
(73) Patentinhaber: CLAAS Selbstfahrende Erntemaschinen GmbH, 33428 Harsewinkel (DE)
(72) Erfinder: Claes, Ulrich, 49201 Dissen (DE); Röwekamp, Thomas, 49134 Wallenhorst (DE); Paulessen, Georg, 47877 Willich (DE); Scholz, Egbert, 33729 Bielefeld (DE)

(56) Entgegenhaltungen:
- EP-A2- 1 564 157
- DE-A1- 4 445 933
- US-A1- 2003 078 085
- US-A1- 2003 232 634
- US-A1- 2009 215 509

## Beschreibung

Die vorliegende Erfindung betrifft einen Mähdrescher mit einem eine oberen Öffnung aufweisenden Korntank und einem an der oberen Öffnung angeordneten faltbaren, zwei einander gegenüberliegende, einteilige, flächige Aufsatzteile und zwei einander gegenüberliegende, mehrteilige, flächige Aufsatzteile umfassenden Aufsatz, dessen Aufsatzteile am oberen Rand der oberen Öffnung des Korntankes schwenkbar angeordnet sowie schwenkbar miteinander verbundenen sind, und die in flachliegenden Verschlusspositionen einen die Öffnung zumindest teilweise verschließenden Deckel bilden und in aufgestellten Befüllpositionen das Volumen des Korntankes vergrößern.

Die Korntanks von Mähdreschern sind mit Korntankaufsätzen versehen, welche aus mehreren Seitenwänden bestehen. Die Seitenwände sind von geschlossenen Positionen in geöffnete Positionen und umgekehrt bewegbar. Während der Fahrt auf der Straße sind die Seitenwände raumsparend zu einem Deckel geschlossen zusammengeklappt, um eine vorgeschriebene Gesamthöhe des Mähdreschers nicht zu überschreiten. Beim Betrieb auf dem Feld sind die Seitenwände in ihren geöffneten Positionen jeweils hochgestellt, um das Volumen des Korntanks zu vergrößern, so dass der Korntank in größeren Intervallen entleert werden kann.

Ein Mähdrescher der eingangs genannten Art ist aus der EP 1 564 157 A2 bekannt. Der Mähdrescher weist einen faltbaren Aufsatz auf, der aus zwei einander gegenüberliegenden mehrteiligen Aufsatzteilen und zwei einander gegenüberliegenden einteiligen Aufsatzteilen besteht. Die mehrteiligen Aufsatzteile umfassen jeweils zwei Einfaltdreiecke, zwischen denen ein Mittelteil angeordnet ist, mit dem die Einfaltdreiecke durch Scharniere verbunden sind. Die mehrteiligen Aufsatzteile des Aufsatzes erstrecken sich quer zur Fahrtrichtung des Mähdreschers und kommen in ihrer flachliegenden Verschlussposition unter den sich einander gegenüberliegenden einteiligen Aufsatzteilen zum Liegen. Die Abmessungen der jeweils einander gegenüberliegenden einteiligen beziehungsweise mehrteiligen Aufsatzteile sind derart gewählt, dass diese in ihrer flachliegenden Verschlussposition jeweils in einer Ebene liegen, das heißt, dass sich die Stirnseiten der einteiligen beziehungsweise mehrteiligen Aufsatzteile einander auf Stoß gegenüberliegen. Die Aufsatzteile sind miteinander durch Scharniere verbunden, was zu einer Zwangsführung der Aufsatzteile bei einer Überführung aus ihrer Verschlussposition in die Befüllposition und umgekehrt führt.
Auf Grund des rechteckförmigen Querschnitts des Korntanks, dessen Erstreckung quer zur Fahrtrichtung größer ist als in Fahrtrichtung, sind die einteiligen Aufsatzteile breiter als die mehrteiligen Aufsatzteile, so dass das durch den Aufsatz erreichbare zusätzliche Volumen in aufgestellter Befüllposition der Aufsatzteile durch die Höhe der mehrteiligen Aufsatzteile beschränkt ist. Diese wiederum ist durch die Anordnung der mehrteiligen Aufbauteile in ihrer Verschlussposition sowie die Zwangsführung der Aufsatzteile beschränkt.
Der Erfindung liegt somit die Aufgabe zu Grunde, den Mähdrescher derart weiterzubilden, dass durch eine einfache konstruktive Maßnahme eine Erweiterung des Korntankvolumens erreichbar ist.
Diese Aufgabe wird erfindungsgemäß durch die kennzeichnenden Merkmale des Anspruches 1 gelöst.
Weitere vorteilhafte Ausgestaltungen der Erfindung sind Gegenstand der Unteransprüche. Durch die Merkmale des Anspruchs 1 wird erreicht, dass durch eine zusätzliche Faltebene an einem der mehrteiligen Aufsatzteile die Bewegungsabläufe zur Überführung der mehrteiligen Aufsatzteile aus seiner Verschlussposition in die Befüllposition und umgekehrt von den Bewegungsabläufen der einteiligen Aufsatzteile derart entkoppelt ist, dass sich die mehrteiligen Aufsatzteile in ihrer Verschlussposition abschnittsweise überlappen. Die Überlappung lässt eine Angleichung der mehrteiligen Aufsatzteile an die Höhe der einteiligen Aufsatzteile zu, so dass eine Vergrößerung des Korntankvolumens erreicht wird.

Hierzu ist jedes mehrteilige Aufsatzteil aus einem zwischen zwei Einfaltdreieckpaaren eingefassten trapezförmigen Mittelteil gebildet, welche jeweils ein inneres, dem Mittelteil zugewandtes Einfaltdreieck und ein äußeres, dem jeweiligen einteiligen Aufsatzteil zugewandtes Einfaltdreieck aufweisen. Durch das zusätzliche innere Einfaltdreieck an einem der mehrteiligen Aufsatzteile wird eine unsymmetrische Zusammenfaltung der mehrteiligen Aufsatzteile erreicht, da diese von der Zwangsführung der einteiligen Aufsatzteile insoweit entkoppelt ist, dass dieses mehrteilige Aufsatzteil, insbesondere dessen Mittelteil, eine andere Bewegungsbahn beschreibt als das Mittelteil des gegenüberliegenden mehrteiligen Aufsatzteiles.

Weiterhin können das innere und das äußere Einfaltdreieck eines Paares durch ein erstes Scharnier miteinander und das innere Einfaltdreieck durch ein zweites Scharnier mit dem Mittelteil schwenkbar verbunden sein.

Vorzugsweise können die inneren Einfaltdreiecke des mehrteiligen Aufsatzteiles in ihrer Verschlussposition als Abstandhalter dienen. Die inneren Einfaltdreiecke kippen bei der Überführung von der Befüllposition in die Verschlussposition nach innen und werden in eine sich im Wesentlichen senkrecht nach unten erstreckende Position überführt, wobei sich der Mittelteil zwischen den inneren Einfaltdreiecken befindet. Die Vorderkante des Mittelteils befindet sich auf Grund der Form der inneren Einfaltdreiecke in einer Ebene, die unterhalb der Schwenkachse des Mittelteiles liegt, wodurch eine Beabstandung in vertikaler Richtung zwischen dem Mittelteil und den äußeren Einfaltdreiecken erreicht wird, die eine überlappende Anordnung der Mittelteile der beiden mehrteiligen Aufsatzteile bei der Überführung in die beziehungsweise mit Erreichen der Verschlussposition ermöglicht.

Vorteilhafterweise kann das äußere Einfaltdreieck einen Anschlag aufweisen, an welchem das innere Einfaltdreieck in geöffneter Position des Aufsatzes abschnittsweise anliegt. Der Anschlag dient dazu, bei der Überführung in die Verschlussposition des Aufsatzes die Bewegungsrichtung der inneren Einfaltdreiecke vorzugeben. Dadurch wird sichergestellt, dass sich das innere Einfaltdreieck bei der Überführung des Aufsatzes aus der Befüllposition in die Verschlussposition stets in Richtung der Bewegung des mehrteiligen Aufsatzteiles bewegt wird.

Insbesondere können die einteiligen Aufsatzteile und die mehrteiligen Aufsatzteile durch eine Schwenkmechanik betätigbar sein. Die Schwenkmechanik dient dazu, den Bewegungsablauf der einzelnen Elemente bei einer Überführung von der Befüllposition des Aufsatzes eine Verschlussposition aufeinander abzustimmen.

Hierzu kann die Schwenkmechanik eine erste Hebelanordnung und eine zweite Hebelanordnung umfassen, die dem Verschwenken der mehrteiligen Aufsatzteile dienen.

Dabei weist die erste Hebelanordnung einen kürzeren Schwenkweg auf als die zweite Hebelanordnung. Auf diese Weise ist sichergestellt, dass das mehrteilige Aufsatzteil, welches eine zusätzliche Faltebene aufweist, stets zuerst die im Wesentlichen in der Horizontalen liegende Verschlussposition einnimmt.

Die vorliegende Erfindung wird nachfolgend anhand eines in den Zeichnungen dargestellten Ausführungsbeispiels näher erläutert.

Es zeigen:
- Fig. 1: eine schematische Seitenansicht eines Mähdrescher;
- Fig. 2: eine Detailansicht eines Korntanks mit einem Aufsatz zur Vergrößerung des Volumens des Korntankes in einer Arbeitsposition;
- Fig. 3: eine Detailansicht gemäß Fig. 2 in einer Übergangsposition des Aufsatzes;
- Fig. 4: eine Detailansicht gemäß Fig. 3 in einer Übergangsposition des Aufsatzes;
- Fig. 5: eine Detailansicht gemäß Fig. 2 in einer Transportposition des Aufsatzes;
- Fig. 6a: eine vergrößerte Detailansicht II gemäß Fig. 2;
- Fig. 6b: eine vergrößerte Detailansicht III gemäß Fig. 3;
- Fig. 7: eine schematische Längsschnittansicht des Aufsatzes gemäß Fig. 3.

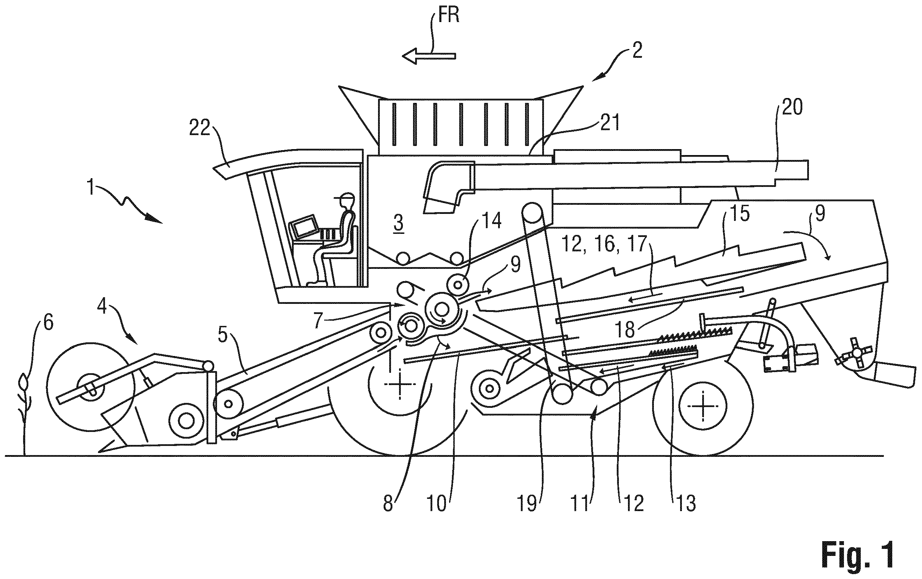

In Fig.1 ist ein schematischer Längsschnitt durch einen Mähdrescher 1 mit einem faltbaren Aufsatz 2 zur Vergrößerung des Volumens eines Korntanks 3 dargestellt. Der Mähdrescher 1 ist frontseitig mit einem Schneidwerk 4 ausgestattet, das an einem Schrägförderer 5 angeordnet ist. Mit dem Schneidwerk 4 nimmt der Mähdrescher 1 das Erntegut 6 auf und führt es dem Schrägförderer 5 zu. Der Schrägförderer 5 übergibt das Erntegut 6 an ein nachgeschaltetes Dreschwerk 7. Das Dreschwerk 7 bereitet das Erntegut 6 auf, wobei es in ein Korn-Spreu-Gemisch 8 und einen aus ausgedroschenen Halmen bestehenden Gutstrom 9 unterteilt wird. Das Korn-Spreu-Gemisch 8 wird über einen Vorbereitungsboden 10 direkt zu einer Reinigungseinrichtung 11 gefördert, die Körner 12 von den Nichtkornbestandteilen 13, das heißt von Halm- und Spreuteilen trennt.

Hinter dem Dreschwerk 7 ist eine entgegen dem Uhrzeigersinn rotierende Wendetrommel 14 angeordnet, die den aus ausgedroschenen Halmen bestehenden Gutstrom 9 auf einen Hordenschüttler 15 fördert. Der Hordenschüttler 15 trennt noch im Gutstrom 9 vorhandene Körner 12, Kurzstroh 16 und Spreu 17, die über einen Rücklaufboden 18 ebenfalls in die Reinigungseinrichtung 11 gelangen. Die von der Reinigungseinrichtung 11 abgetrennten Körner 12 fördert ein Kornelevator 19 in den Korntank 3, der als ein Behälter mit im Wesentlichen rechteckförmiger Grundfläche ausgeführt ist und üblicherweise hinter einer Fahrerkabine 22 des Mähdreschers 1 angeordnet ist. Der als Korntank 3 ausgeführte Behälter weist eine obere Öffnung 21 auf, an der der Aufsatz 2 angeordnet ist. Bei Bedarf werden die Körner 12 mit einem Korntankentleerförderer 20 aus dem Korntank 3 auf einen Transportwagen (nicht dargestellt) umgeladen. Der auf der Oberseite des Korntanks 3 angeordnete Aufsatz 2 ist zur Vergrößerung des Volumens des Korntanks 3 in seiner Arbeitsposition trichterförmig aufgestellt. Ein Pfeil FR gibt die Fahrtrichtung des Mähdreschers 1 im Erntebetrieb wieder.

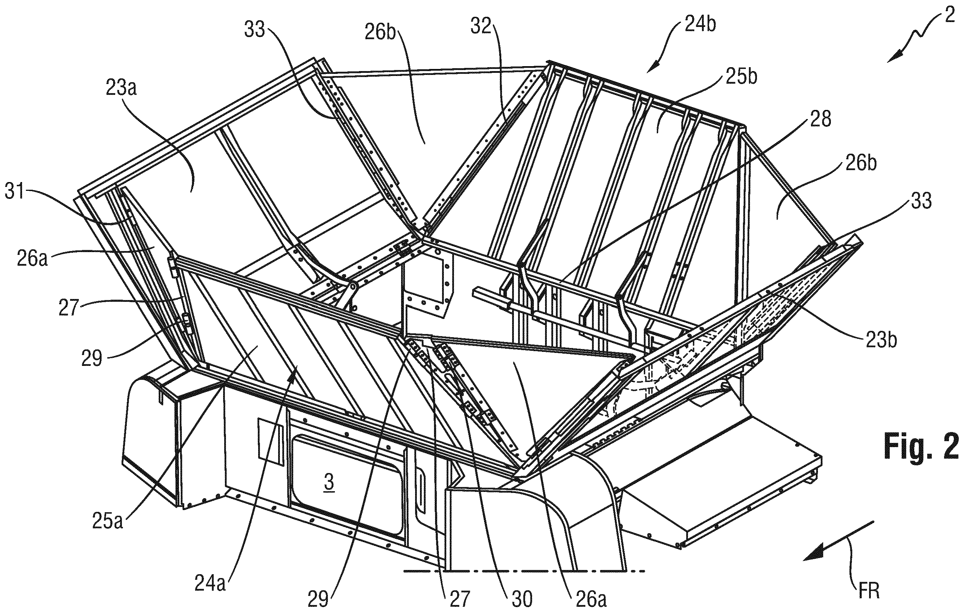

Die Darstellung in Fig. 2 zeigt eine Detailansicht des Korntanks 3 mit dem Aufsatz 2 zur Vergrößerung des Volumens des Korntankes 3 in einer Arbeitsposition. Der Aufsatz 2 umfasst zwei einander gegenüberliegende, einteilige, flächige Aufsatzteile 23a, 23b und zwei einander gegenüberliegende, mehrteilige, flächige Aufsatzteile 24a, 24b. Die Erstreckung der einteiligen Aufsatzteile 23a, 23b in Längsrichtung des Mähdreschers 1 ist größer als die Ausdehnung der mehrteiligen Aufsatzteile 24a, 24b quer zum Mähdrescher 1. In der Arbeitsposition sind die einteiligen Aufsatzteile 23a, 23b und mehrteiligen Aufsatzteile 24a, 24b um am oberen Rand des Korntanks 3 umlaufend angeordnete Schwenkscharniere 28 in eine trichterförmige Position überführbar. Um eine möglichst große Volumenzunahme durch den Aufsatz 2 zu erreichen, liegen die horizontal verlaufenden Außenkanten der einteiligen Aufsatzteile 23a, 23b und der mehrteiligen Aufsatzteile 24a, 24b dabei im Wesentlichen auf einer Höhe. Da die Höhe der einander gegenüberliegenden Mittelteile 25a, 25b in Summe größer ist, als die Ausdehnung der einteiligen Aufsatzteile 23a, 23b in Längsrichtung des Mähdreschers 1, ist eine stirnseitige Anordnung der Mittelteile 25a, 25b auf Stoß in horizontaler Position nicht möglich. Daher wird erfindungsgemäß ein unsymmetrisches Zusammenfalten der mehrteiligen Aufsatzteile 24a, 24b vorgeschlagen, was weiter unten detailliert ausgeführt wird. Die einteiligen Aufsatzteile 23a, 23b sind spiegelbildlich an der oberen Öffnung des Korntankes 3 angeordnet und erstrecken sich im Wesentlichen parallel zur Fahrtrichtung FR. Das in Fahrtrichtung FR gesehen in Arbeitsposition des Aufsatzes 2 der Kabine 22 zugewandte mehrteilige Aufsatzteil 24a umfasst ein trapezförmiges Mittelteil 25a, welches von einem äußeren Einfaltdreieck 26a und einem inneren Einfaltdreieck 27a eingefasst ist, die jeweils paarweise beiderseits des Mittelteils 25a angeordnet sind. Das in Arbeitsposition des Aufsatzes 2 der Kabine 22 abgewandte mehrteilige Aufsatzteil 24b besteht ebenfalls aus einem trapezförmigen Mittelteil 25b, welches von zwei gleichschenkligen Einfaltdreiecken 26b eingefasst ist.

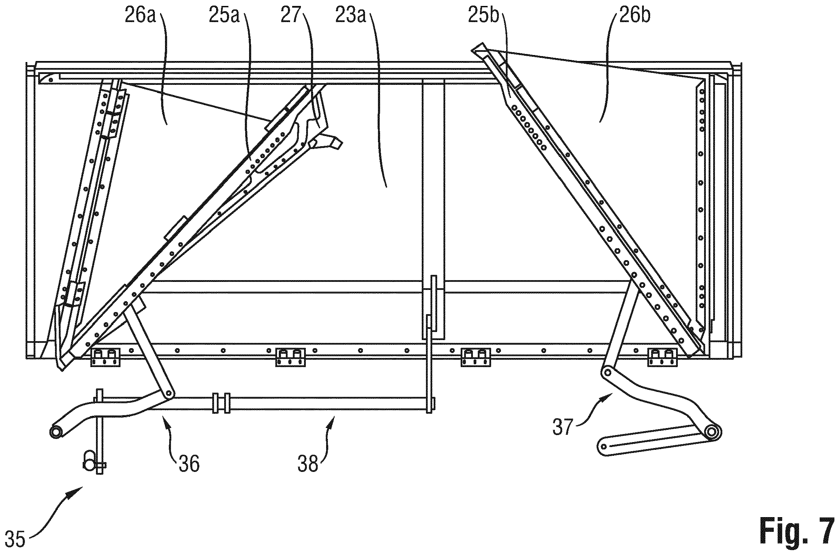

Die Mittelteile 25a, 25b sind jeweils durch das Schwenkscharnier 28 am oberen Rand des Korntankes 3 angeschlagen. Die inneren Einfaltdreiecke 27a sind mit dem Mittelteil 25a durch ein erstes Scharnier 29 schwenkbar verbunden. Das jeweilige äußere Einfaltdreieck 26a ist über ein zweites Scharnier 30 mit dem benachbarten inneren Einfaltdreieck 27a verbunden. Weiterhin steht das jeweilige äußere Einfaltdreieck 26a über ein Scharnier 31 mit dem einteiligen Aufsatzteil 23a in Verbindung. Das von jeweils nur einem Einfaltdreieck 26b eingefasste Mittelteil 25b ist mit diesem über ein Scharnier 32 verbunden. Das jeweilige Einfaltdreieck 26b steht durch ein Scharnier 33 mit den benachbarten einteiligen Aufsatzteilen 23a, 23b in Verbindung. Die Betätigung der einteiligen Aufsatzteile 23a, 23b sowie der mehrteiligen Aufsatzteile 24a, 24b erfolgt unter Verwendung einer in Fig. 7 in Teilen angedeuteten Schwenkmechanik 35. Die Funktionsweise der Schwenkmechanik 35 entspricht im Wesentlichen der in der EP 1 564 157 A2 beschriebenen, auf die hiermit ausdrücklich Bezug genommen wird.

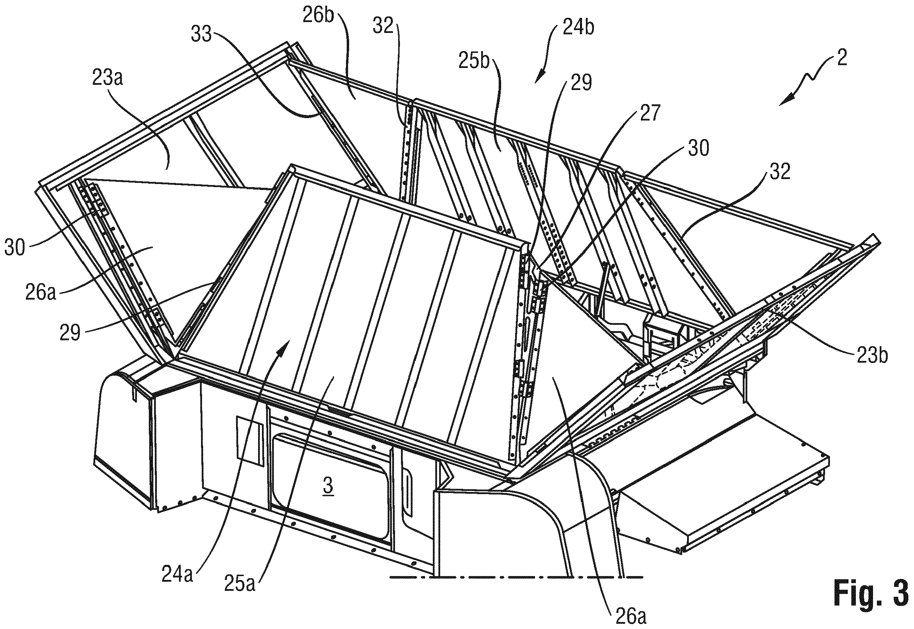

Die Darstellung in Fig. 3 zeigt eine Detailansicht gemäß Fig. 2 in einer Übergangsposition des Aufsatzes 2. In der Übergangsposition werden die einander gegenüberliegenden mehrteiligen Aufsatzteile 24a, 24b durch die zuvor erwähnte Schwenkmechanik 35 aufeinander zu geschwenkt. Aus der Darstellung ist ersichtlich, dass sich die Bewegungsabläufe der einander gegenüberliegenden mehrteiligen Aufsatzteile 24a, 24b voneinander unterscheiden. Während sich der Mittelteil 25b sowie die Einfaltdreiecke 26b des der Kabine 22 abgewandten Aufsatzteiles 24b in der Übergangsposition in einer näherungsweise vertikalen Ebene aufgespannt sind, befinden sich das Mittelteil 25a und die inneren Einfaltdreiecke 27 des der Kabine 22 zugewandten Aufsatzteiles 24a in einer gegenüber den äußeren Einfaltdreiecken 26a vorauseilenden Position. Dies ist auf die erfindungsgemäße Anordnung der inneren Einfaltdreiecke 27 zwischen dem Mittelteil 25a und den äußeren Einfaltdreiecken 26a zurückzuführen. Das jeweilige innere Einfaltdreieck 27 knickt um etwa 90° nach innen ein und führt das an den inneren Einfaltdreiecken 27 angelenkte Mittelteil 25a mit sich. Das Mittelteil 25a hängt in dieser Position zwischen den inneren Einfaltdreiecken 27, die sich im Wesentlichen senkrecht zur Bewegungsrichtung erstrecken, durch. Im weiteren Verlauf des Faltvorganges legt sich das jeweilige äußere Einfaltdreieck 26a über das Mittelteil 25a. Durch das innere Einfaltdreieck 27 wird zwischen dem Mittelteil 25a und den äußeren Einfaltdreiecken 26a des der Kabine 22 zugewandten Aufsatzteiles 24a eine Beabstandung in vertikaler Richtung erreicht, die es dem gegenüberliegenden Mittelteil 25b des mehrteiligen Aufsatzteiles 24b ermöglicht, sich während des Faltens abschnittsweise über das Mittelteil 25a zu legen, ohne das es zu einer Kollision mit den anderen Bauteilen des mehrteiligen Aufsatzteiles 24a kommt. Durch die Unterteilung in das innere Einfaltdreieck 27 und das äußere Einfaltdreieck 26a wird eine unsymmetrische Faltung des mehrteiligen Seitenteils 24a erreicht, die von der Zwangsführung durch die einteiligen Aufsatzteile 23a, 23b, mit denen die mehrteiligen Aufsatzteile 24a, 24b durch die Scharniere 31, 33 schwenkbar verbunden sind, teilweise entkoppelt ist.

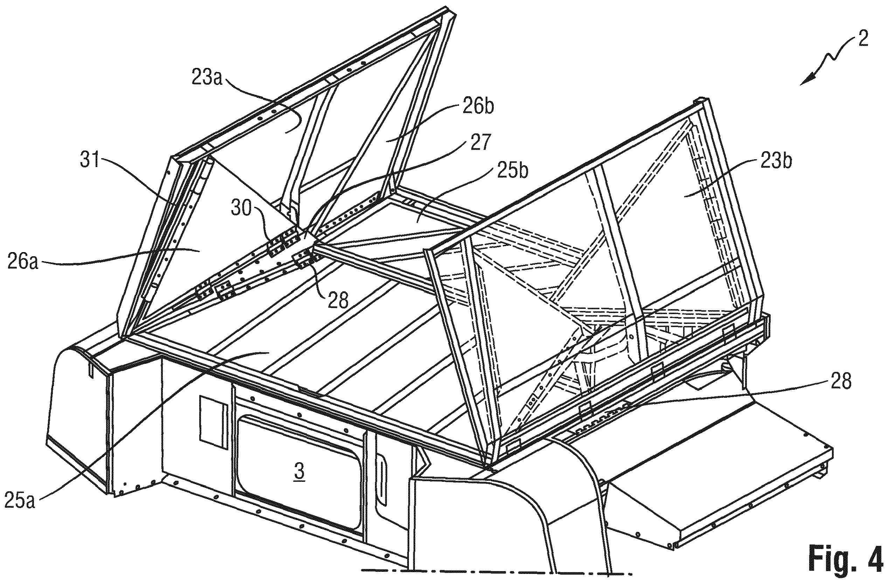

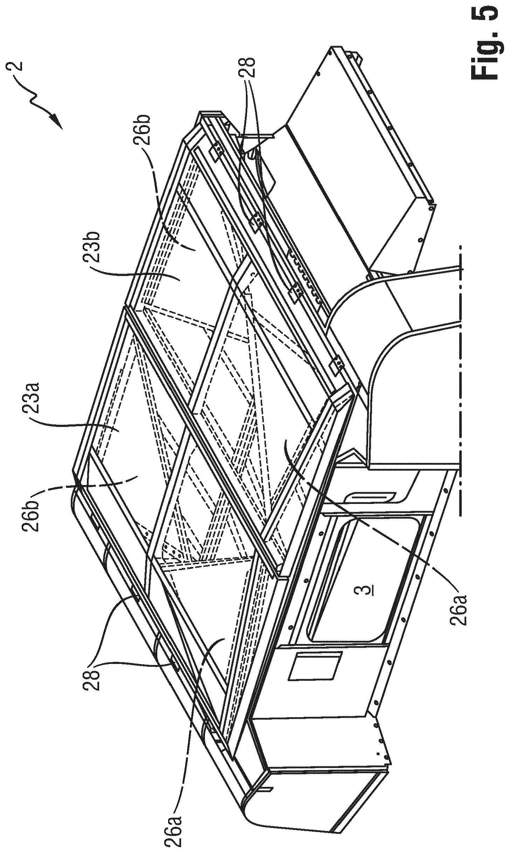

Fig. 4 zeigt eine Detailansicht gemäß Fig. 3 in einer Übergangsposition des Aufsatzes, in welcher sich die mehrteiligen Aufsatzteile 24a, 24b in im Wesentlichen horizontaler Position befinden, in der sich die Mittelteile 25a, 25b abschnittsweise überlappen. Die einteiligen Aufsatzteile 23a, 23b werden aufeinander zu bewegt, um die in Fig. 5 dargestellte Verschlussposition des Aufsatzes 2 einzunehmen. In der Verschlussposition liegen die Stirnseiten der einteiligen Aufsatzteile 23a, 23b einander gegenüber, so dass sich eine ebene, den Korntank 3 verschließende Fläche ausbildet.

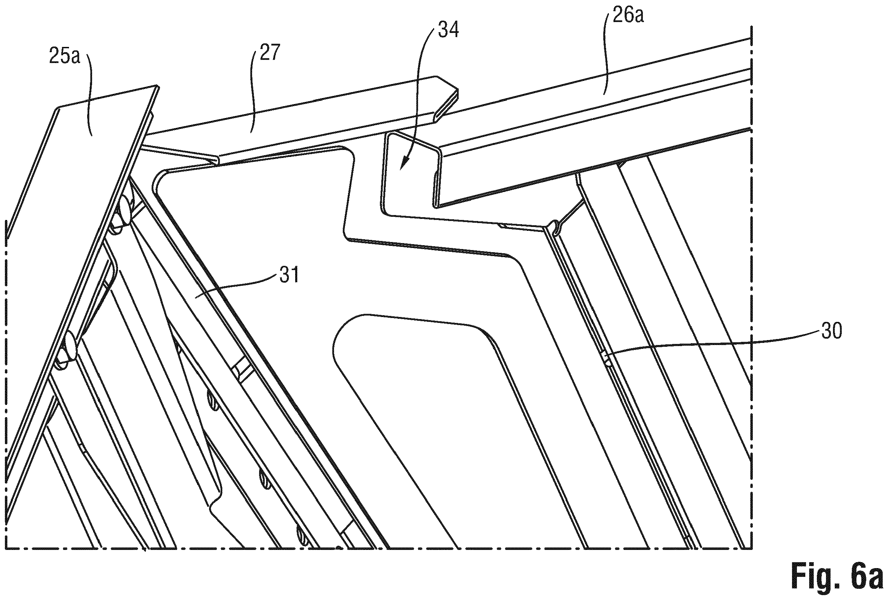

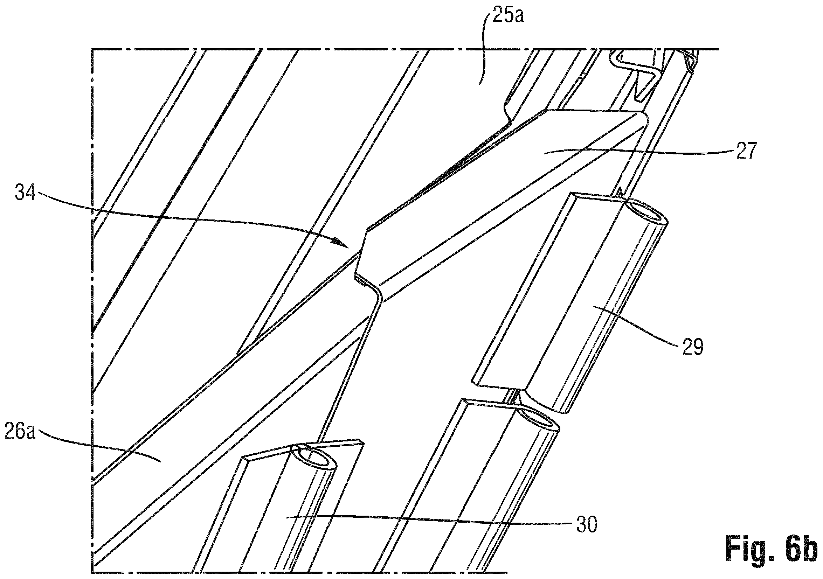

In den Fig. 6a und 6b ist ein Ausschnitt des der Kabine 22 zugewandten mehrteiligen Aufsatzteiles 24a im Detail dargestellt. Fig. 6a zeigt dabei eine Ansicht auf der Innenseite des Aufsatzes 2 und Fig. 6b eine korrespondierende Ansicht der Außenseite des Aufsatzes 2. Die Ansichten gemäß den Fig. 6a und 6b zeigen das mehrteilige Aufsatzteil 24a in der Befüllposition, in der der Aufsatz 2 trichterförmig aufgestellt ist. Das jeweilige äußere Einfaltdreieck 26a weist einen Anschlag 34 auf, der das innere Einfaltdreieck 27 abschnittsweise überlappt. Der Anschlag 34 ist als ein nasenförmiger Vorsprung ausgeführt, an dem sich das innere Einfaltdreieck 27 abstützen kann. Der Anschlag 34 dient dazu, bei der Überführung des Aufsatzes 2 in die Verschlussposition durch die Schwenkmechanik 35 sicherzustellen, dass sich das innere Einfaltdreieck 27 währenddessen nicht unter das Mittelteil 25a bewegen kann, sondern sich oberhalb des Mittelteiles 25a befindet.

Die Darstellung in Fig.7 zeigt eine schematische Längsschnittansicht des Aufsatzes 2 gemäß Fig. 3. In dieser Darstellung werden die mehrteiligen Aufsatzteile 24a, 24b in ihre Verschlussposition überführt. Die Bewegung der einteiligen Aufsatzteile 23a, 23b wie auch der mehrteiligen Aufsatzteile 24a, 24b erfolgt durch die Schwenkmechanik 35, die hier nur teilweise angedeutet ist. Das Mittelteil 25a wird durch eine erste Hebelanordnung 36 und das Mittelteil 25b durch eine zweite Hebelanordnung 27 betätigt. Die erste und die zweite Hebelanordnung 36, 37 unterscheiden sich im Wesentlichen hinsichtlich des Weges, den diese jeweils während des Verschwenkens des jeweiligen mehrteiligen Aufsatzteiles 24a, 24b zurücklegen. Der Weg, den die erste Hebelanordnung 36 zurücklegt ist kürzer als die der zweiten Hebelabordnung 37, so dass das der Kabine 22 zugewandte mehrteilige Aufsatzteil 24a sich in einer Position unterhalb des der Kabine 22 abgewandten Aufsatzteiles 24b befindet. Auf diese Weise wird sichergestellt, dass das der Kabine 22 zugewandte mehrteilige Aufsatzteil 24a vor dem der Kabine 22 abgewandten Aufsatzteil 24b die Verschlussposition erreicht, so dass das Mittelteil 25a in einer Ebene unterhalb des Mittelteiles 25b zum Liegen kommt, um die abschnittsweise Überlappung zu erreichen. Die einander gegenüberliegenden einteiligen Aufsatzteile 23a, 23b werden jeweils durch eine dritte Hebelanordnung 38 betätigt, von denen nur eine dargestellt ist.

**Bezugszeichenliste**

| | | | |
|---|---|---|---|
| **1** | Mähdrescher | **23a** | einteiliges Aufsatzteil |
| **2** | Aufsatz | **23b** | einteiliges Aufsatzteil |
| **3** | Korntank | **24a** | mehrteiliges Aufsatzteil |
| **4** | Schneidwerk | **24b** | mehrteiliges Aufsatzteil |
| **5** | Schrägförderer | **25a** | Mittelteil |
| **6** | Erntegut | **25b** | Mittelteil |
| **7** | Dreschwerk | **26a** | äußeres Einfaltdreieck |
| **8** | Korn-Spreu-Gemisch | **26b** | äußeres Einfaltdreieck |
| **9** | Gutstrom | **27** | inneres Einfaltdreieck |
| **10** | Vorbereitungsboden | **28** | Schwenkscharnier |
| **11** | Reinigungseinrichtung | **29** | erstes Scharnier |
| **12** | Korn | **30** | zweites Scharnier |
| **13** | Nichtkornbestandteil | **31** | Scharnier |
| **14** | Wendetrommel | **32** | Scharnier |
| **15** | Hordenschüttler | **33** | Scharnier |
| **16** | Kurzstroh | **34** | Anschlag |
| **17** | Spreu | **35** | Schwenkmechanik |
| **18** | Rücklaufboden | **36** | erste Hebelanordnung |
| **19** | Kornelevator | **37** | zweite Hebelanordnung |
| **20** | Korntankentleerförderer | **38** | dritte Hebelanordnung |
| **21** | obere Öffnung | | |
| **22** | Kabine | **FR** | Fahrtrichtung |

## Patentansprüche

1. Mähdrescher (1), mit einem eine oberen Öffnung (21) aufweisenden Korntank (3) und einem an der oberen Öffnung (21) angeordneten faltbaren, zwei einander gegenüberliegende, einteilige, flächige Aufsatzteile (23a, 23b) und zwei einander gegenüberliegende, mehrteilige, flächige Aufsatzteile (24a, 24b) umfassenden Aufsatz (2), dessen Aufsatzteile (23a, 23b, 24a, 24b) am oberen Rand der oberen Öffnung (21) des Korntankes (3) schwenkbar angeordnet sowie schwenkbar miteinander verbundenen sind, und die in flachliegenden Verschlusspositionen einen die Öffnung (21) zumindest teilweise verschließenden Deckel bilden und in aufgestellten Befüllpositionen das Volumen des Korntankes (3) vergrößern,
**dadurch gekennzeichnet,**
**dass** jedes mehrteilige Aufsatzteil (24a, 24b) aus einem zwischen zwei Einfaltdreieckpaaren (26a, 27) eingefassten trapezförmigen Mittelteil (25a) gebildet ist, welche jeweils ein inneres, dem Mittelteil (25a) zugewandtes Einfaltdreieck (27) und ein äußeres, dem jeweiligen einteiligen Aufsatzteil (23a, 23b) zugewandtes Einfaltdreieck (26a) aufweisen.

2. Mähdrescher (1) nach Anspruch 1, **dadurch gekennzeichnet, dass** das innere und das äußere Einfaltdreieck (26a, 27) eines Paares durch ein erstes Scharnier (29) miteinander und das innere Einfaltdreieck (27) durch ein zweites Scharnier (30) mit dem Mittelteil (25a) schwenkbar verbunden ist.

3. Mähdrescher (1) nach einem der Ansprüche 1 oder 2, **dadurch gekennzeichnet, dass** die inneren Einfaltdreiecke (27) des mehrteiligen Aufsatzteiles (24a) in ihrer Verschlussposition als Abstandhalter dienen.

4. Mähdrescher (1) nach einem der Ansprüche 1 bis 3, **dadurch gekennzeichnet, dass** das äußere Einfaltdreieck (26a) einen Anschlag (34) aufweist, an welchem das innere Einfaltdreieck (27) in geöffneter Position des Aufsatzes (2) abschnittsweise anliegt.

5. Mähdrescher (1) nach einem der Ansprüche 1 bis 4, **dadurch gekennzeichnet, dass** die einteiligen Aufsatzteile (23a, 23b) und die mehrteiligen Aufsatzteile (24a, 24b) durch eine Schwenkmechanik (35) betätigbar sind.

6. Mähdrescher (1) nach Anspruch 5, **dadurch gekennzeichnet, dass** die Schwenkmechanik (35) eine erste Hebelanordnung (36) und eine zweite Hebelanordnung (37) umfasst, die dem Verschwenken der mehrteiligen Aufsatzteile (24a, 24b) dienen.

7. Mähdrescher (1) nach Anspruch 6, **dadurch gekennzeichnet, dass** die erste Hebelanordnung (36) einen kürzeren Schwenkweg aufweist als die zweite Hebelanordnung (37).

## Claims

1. A combine harvester (1) comprising a grain tank (3) having an upper opening (21) and a foldable flat attachment (2) which is arranged at the upper opening (21) and includes two mutually opposite, one-piece flat attachment portions (23a, 23b) and two mutually opposite, multi-piece flat attachment portions (24a, 24b) and whose attachment portions (23a, 23b, 24a, 24b) are arranged pivotably at the upper edge of the upper opening (21) of the grain tank (3) and are pivotably connected together and which in closure positions of lying flat form a cover which at least partially closes the opening (21) and in the erected filling positions increase the volume of the grain tank (3),
**characterised in that**
each multi-part attachment portion (24a, 24b) is formed from a trapezoidal central portion (25a) bordered between two fold-in pairs of triangles (26a, 27) which respectively have an inner fold-in triangle (27) that is towards the central portion (25a) and an outer fold-in triangle (26a) which is towards the respective one-piece attachment portion (23a, 23b).

2. A combine harvester (1) according to claim 1 **characterised in that** the inner and the outer fold-in triangles (26a, 27) of a pair are pivotably connected together by a first hinge (29) and the inner fold-in triangle (27) is pivotably connected to the central portion (25a) by a second hinge (30).

3. A combine harvester (1) according to one of claims 1 and 2 **characterised in that** the inner fold-in triangles (27) of the multi-piece attachment portion (24) serve in their closed position as spacers.

4. A combine harvester (1) according to one of claims 1 to 3 **characterised in that** the outer fold-in triangle (26a) has an abutment (34) against which the inner fold-in triangle (27) bears portion-wise in the opened position of the attachment (2).

5. A combine harvester (1) according to one of claims 1 to 4 **characterised in that** the one-piece attachment portions (23a, 23b) and the multi-piece attachment portions (24a, 24b) are actuable by way of a pivotal mechanism (35).

6. A combine harvester (1) according to claim 5 **characterised in that** the pivotal mechanism (35) includes a first lever arrangement (36) and a second lever arrangement (37) which serve for the pivotal movement of the multi-part attachment portions (24a, 24b).

7. A combine harvester (1) according to claim 6 **characterised in that** the first lever arrangement (36) has a shorter pivotal path of movement than the second lever arrangement (37).

## Revendications

1. Moissonneuse-batteuse (1) comprenant une trémie à grain (3) présentant une ouverture supérieure (21) et comprenant une superstructure pliable (2) qui est disposée sur l'ouverture supérieure (21), qui comprend deux parties de superstructure planes, à une pièce, en vis-à-vis (23a, 23b) et deux parties de superstructure planes, à plusieurs pièces, en vis-à-vis (24a, 24b) et dont les parties de superstructure (23a, 23b, 24a, 24b) sont disposées à pivotement sur le bord supérieur de l'ouverture supérieure (21) de la trémie à grain (3) ainsi que reliées à pivotement entre elles et, dans des positions fermées à plat, forment un couvercle fermant au moins en partie l'ouverture (21) et, dans des positions de remplissage relevées, agrandissent le volume de la trémie à grain (3), **caractérisée en ce que** chaque partie de superstructure à plusieurs pièces (24a, 24b) est formée d'une partie centrale trapézoïdale (25a) qui est insérée entre deux paires de triangles pliables (26a, 27) qui comportent chacune un triangle pliable intérieur (27) tourné vers la partie centrale (25a) et un triangle pliable extérieur (26a) tourné vers la partie respective de superstructure à une pièce (23a, 23b).

2. Moissonneuse-batteuse (1) selon la revendication 1, **caractérisée en ce que** le triangle pliable intérieur et le triangle pliable extérieur (26a, 27) d'une paire sont reliés à pivotement entre eux par l'intermédiaire d'une première charnière (29), et le triangle pliable intérieur (27) l'est à la partie centrale (25a) par l'intermédiaire d'une seconde charnière (30).

3. Moissonneuse-batteuse (1) selon une des revendications 1 ou 2, **caractérisée en ce que**, dans leur position fermée, les triangles pliables intérieurs (27) de la partie de superstructure à plusieurs pièces (24a) servent d'éléments d'écartement.

4. Moissonneuse-batteuse (1) selon une des revendications 1 à 3, **caractérisée en ce que** le triangle pliable extérieur (26a) comporte une butée (34) contre laquelle, dans la position ouverte de la superstructure (2), le triangle pliable intérieur (27) repose par portions.

5. Moissonneuse-batteuse (1) selon une des revendications 1 à 4, **caractérisée en ce que** les parties de superstructure à une pièce (23a, 23b) et les parties de superstructure à plusieurs pièces (24a, 24b) peuvent être actionnées par l'intermédiaire d'un mécanisme de pivotement (35).

6. Moissonneuse-batteuse (1) selon la revendication 5, **caractérisée en ce que** le mécanisme de pivotement (35) comprend un premier agencement de leviers (36) et un second agencement de leviers (37), lesquels servent à faire pivoter les parties de superstructure à plusieurs pièces (24a, 24b).

7. Moissonneuse-batteuse (1) selon la revendication 6, **caractérisé en ce que** le premier agencement de leviers (36) présente une course de pivotement plus courte que le second agencement de leviers (37).
